(19) **Europäisches Patentamt / European Patent Office / Office européen des brevets**

(11) **EP 4 215 962 B1**

(12) **EUROPEAN PATENT SPECIFICATION**

(45) Date of publication and mention
of the grant of the patent:
**12.02.2025 Bulletin 2025/07**

(21) Application number: **20954190.3**

(22) Date of filing: **18.09.2020**

(51) International Patent Classification (IPC):
*G02B 6/02* (2006.01)     *G02B 6/26* (2006.01)
*G02B 6/36* (2006.01)     *G02B 6/42* (2006.01)
*G02B 6/293* (2006.01)    *G02B 6/124* (2006.01)
*G02B 6/14* (2006.01)     *G02B 6/30* (2006.01)

(52) Cooperative Patent Classification (CPC):
**G02B 6/02085; G02B 6/02095; G02B 6/124;
G02B 6/14; G02B 6/29317; G02B 6/29323;
G02B 6/30; G02B 6/4214**

(86) International application number:
**PCT/JP2020/035619**

(87) International publication number:
**WO 2022/059205 (24.03.2022 Gazette 2022/12)**

(54) **OPTICAL SIDE INPUT/OUTPUT CIRCUIT AND OPTICAL CONNECTOR**

OPTISCHE EINGANGS-/AUSGANGSSCHALTUNG UND OPTISCHER VERBINDER

CIRCUIT D'ENTRÉE/SORTIE CÔTÉ OPTIQUE ET CONNECTEUR OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2023 Bulletin 2023/30**

(73) Proprietor: **Nippon Telegraph And Telephone
Corporation
Chiyoda-ku
Tokyo 100-8116 (JP)**

(72) Inventors:
• **YAMASHITA, Yoko
Musashino-shi, Tokyo 180-8585 (JP)**
• **MATSUI, Takashi
Musashino-shi, Tokyo 180-8585 (JP)**

• **NAKAJIMA, Kazuhide
Musashino-shi, Tokyo 180-8585 (JP)**

(74) Representative: **v. Bezold & Partner
Patentanwälte - PartG mbB
Ridlerstraße 57
80339 München (DE)**

(56) References cited:
JP-A- 2011 232 706     JP-A- 2019 515 346
JP-A- 2019 515 346     JP-A- H11 133 255
KR-A- 20140 042 056    US-A1- 2008 079 940
US-A1- 2018 196 191

Remarks:
The file contains technical information submitted
after the application was filed and not included in this
specification

EP 4 215 962 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present disclosure relates to an optical side input/output circuit that inputs/outputs light from a side surface of an optical fiber, and an optical connector including the optical side input/output circuit.

Background Art

For general prior art, reference is made to patent documents [1] and [2].

Patent document [1] discloses an optical connector with a built-in photodetector for detecting light in the optical connector; an adapter for detachably receiving an optical connector, comprising an electrode configured to electrically contact an electrode of the optical connector; a connection apparatus comprising an arrangement of adapters for detachably receiving a plurality of optical connectors, each adapter comprising an electrode configured to electrically contact an electrode of the respective optical connector; a system with an interface configured to make an optical connection with an optical connector and a processing unit configured to receive from the connector an indication and to generate a feedback signal indicative of said indication; and/ an optical connector responsive to light to generate an electrical signal.

Patent document [2] is directed to the creation of optical waveguiding devices from standard optical fibers by the creation of zones of permanently altered refractive index characteristics therein. A high intensity femtosecond laser beam is focused at a predetermined target region in the fiber so as to soften the glass material at the target region. After aligning the focal region with the target region in the fiber there will be relative movement between the focal region and the fiber, which has the effect of sweeping the focal region across the fiber in a predetermined path, so as to create a secondary waveguide path. A portion of the light traveling along the core is removed from the core along the secondary waveguide path such that the device can be utilized as an attenuator, an optical tap, or a polarimeter.

As an optical branching technique, a wavelength multiplexing coupler or the like using an arrayed waveguide grating is known. Also, to realize optical sensing and monitoring of a transmission path, an optical side output technique using a tap waveguide has been suggested. By the optical side output technique, an optical waveguide is formed by laser processing in a fiber, and part of the power of light is output from the core (see Non Patent Literature 1, for example).

Citation List

Non Patent Literature

Non Patent Literature 1: Peng Ji et al, optics express, vol.26, no.12, p14972-14981, (2018)
Non Patent Literature 2: Y. Shani et al, "Integrated Optic Adiabatic Devices on Silicon," IEEE J. Quantum Electron., vol. 27, no. 3, pp. 556-566, 1991.
Non Patent Literature 3: Katsunari OKAMOTO, "Theory of optical waveguides" (CORONA PUBLISHING CO., LTD., 1992)
Non Patent Literature 4: A. Urushibara et al, "Experimental verification of mode-dependent loss reduction by mode coupling using long-period grating," OFC2017, Tu2J.6, 2017.
Non Patent Literature 5: B. Y. Kim et at, "All-fiber acousto-optic frequency shifter," Optics letters, vol. 11, no. 6, pp389-391, 1986

Patent Literature

[1] JP 2019 515 346 A;
[2] US 2008/079940 A1.

Summary of Invention

Technical Problem

A conventional wavelength multiplexing coupler is large in size, and has reflection and loss that are larger at connecting points. Therefore, it is difficult to dispose such wavelength multiplexing couplers at multiple points in a transmission path. Further, conventional tap waveguides are easily disposed at multiple points in a transmission path, but it is difficult to increase the wavelength selectivity of these tap waveguides.

Therefore, to solve the above problem, the present invention aims to provide an optical side input/output circuit that has wavelength selectivity and is easily disposed at multiple points in a transmission path, and an optical connector.

Solution to Problem

To achieve the above object, an optical side input/output circuit according to the present invention includes a tap waveguide having wavelength selectivity.

Specifically, an optical side input/output circuit according to the present invention and defined in claim 1 includes:

a tap portion in which a tap waveguide that outputs light of a higher-order mode from a side surface of an optical fiber is formed, the light of the higher-order mode being of light propagating in the core of the optical fiber; and
a grating portion that is located in a stage before the tap portion in the propagation direction of the light, and has a grating that converts light of a desired wavelength from a basic mode to the higher-order mode, the grating being formed in the core of the optical fiber.

Further, an optical connector according to the present invention and defined in claim 7 includes the optical side input/output circuit.

The optical side input/output circuit has a long-period fiber grating formed to give wavelength selectivity to the tap waveguide. Having the tap waveguide, the optical side input/output circuit is easily disposed at multiple points in a transmission path. Further, the optical side input/output circuit can input/output light of a desired wavelength with the long-period fiber grating. Thus, the present invention can provide an optical side input/output circuit that has wavelength selectivity and is easily disposed at multiple points in a transmission path, and an optical connector.

The grating portion of the optical side input/output circuit according to the present invention has a normalized frequency V of 2.4 or higher at the desired wavelength, and the tap portion satisfies

$$d_t/d_c \geq 0.24V - 0.27,$$

$$0.33 \leq d_t/d_c \leq 0.87,$$

$$0.28V - 0.35 \leq \delta n/(n_{core} - n_{clad}) \leq 0.03V + 1.28,$$

and

$$\alpha \leq -0.58V^2 + 2.65V - 1.48.$$

Here, $d_t$ represents a diameter of the tap waveguide, $d_c$ represents a diameter of the core of the optical fiber, $\delta n$ represents a refractive index change amount of the tap waveguide with respect to the optical fiber, $n_{core}$ and $n_{clad}$ represent a refractive index of the core of the optical fiber and a refractive index of a cladding, respectively, and $\alpha$ represents an angle (°) formed by the core of the optical fiber and the tap waveguide.

The refractive index of the core of the grating portion of the optical side input/output circuit according to the present invention is higher than the refractive index of the core of the tap portion. As the higher-order mode is excited in the grating portion, light of the desired wavelength can be tapped even in a case where the higher-order mode does not propagate in the tap portion.

The optical side input/output circuit according to the present invention is characterized in that a plurality of sets of the tap portion and the grating portion is continuously arranged in the optical fiber. Further, the optical side input/output circuit according to the present invention further includes a light receiver that is disposed on the side surface of the optical fiber, and receives light output from the tap portion. Tapping can be performed at a plurality of locations in the transmission path, and thus, control on the transmission path and multistage optical power feeding can be performed.

Note that the respective inventions described above can be combined as appropriate.

Advantageous Effects of Invention

The present invention can provide an optical side input/output circuit that has wavelength selectivity and is easily disposed at multiple points in a transmission path, and an optical connector.

Brief Description of Drawings

Fig. 1 is a diagram for explaining an optical side input/output circuit according to the present invention.

Fig. 2 is a graph for explaining the characteristics of an optical side input/output circuit according to the present invention.

Fig. 3 is a diagram for explaining the characteristics of an optical side input/output circuit according to the present invention.

Fig. 4 is a graph for explaining the characteristics of an optical side input/output circuit according to the present invention.

Fig. 5 is a graph for explaining the characteristics of an optical side input/output circuit according to the present invention.

Fig. 6 is a graph for explaining the characteristics of an optical side input/output circuit according to the present invention.

Fig. 7 is a graph for explaining the characteristics of an optical side input/output circuit according to the present invention.

Fig. 8 is a graph for explaining the characteristics of an optical side input/output circuit according to the present invention.

Fig. 9 is graphs for explaining the characteristics of an optical side input/output circuit according to the present invention.

Fig. 10 is graphs for explaining the characteristics of an optical side input/output circuit according to the present invention.

Fig. 11 is graphs for explaining the characteristics of an optical side input/output circuit according to the present invention.

Fig. 12 is a graph for explaining the characteristics of an optical side input/output circuit according to the present invention.

Fig. 13 is graphs for explaining the characteristics of an optical side input/output circuit according to the present invention.

Fig. 14 is a graph for explaining the characteristics of an optical side input/output circuit according to the present invention.

Fig. 15 is diagrams for explaining grating forming methods.

Fig. 16 is a diagram for explaining an optical side input/output circuit according to the present invention.

Fig. 17 is a diagram for explaining an optical side input/output circuit according to the present invention.

Fig. 18 is a diagram for explaining an optical connector according to the present invention.

Fig. 19 is a diagram for explaining an optical connector according to the present invention.

Description of Embodiments

An embodiment of the present invention will be described with reference to the accompanying drawings. The embodiments described below are examples of the present invention, and the present invention is not limited to these embodiments. Note that components having the same reference numerals in the present description and the drawings indicate the same components.

(First Embodiment)

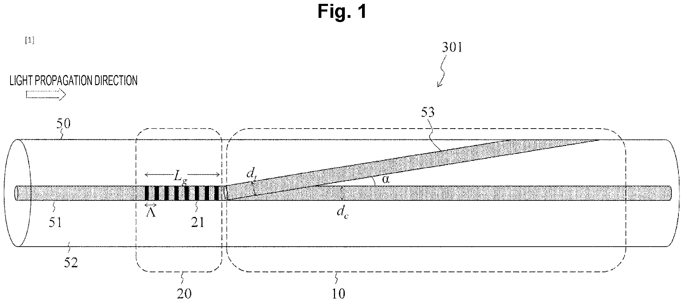

Fig. 1 is a diagram for explaining an optical side input/output circuit 301 according to this embodiment. The optical side input/output circuit 301 includes:

a tap portion 10 in which a tap waveguide 53 that outputs light of a higher-order mode from a side surface of an optical fiber 50 is formed, the light of the higher-order mode being of light propagating in the core 51 of the optical fiber 50; and

a grating portion 20 that is located in a stage before the tap portion 10 in the propagation direction of the light, and has a grating 21 that converts light of a desired wavelength from a basic mode to the higher-order mode, the grating 21 being formed in the core 51 of the optical fiber 50.

The optical fiber 50 is a step-index fiber that is defined by the diameter $d_c$ of the core 51, the diameter $d_f$ of the optical fiber 50, the refractive index $n_{core}$ (the refractive index of the portion not including the grating) of the core 51, and the refractive index $n_{clad}$ of a cladding 52. In the optical fiber 50, the grating portion 20 and the tap portion 10 are formed in this order in the longitudinal direction. The direction in which light can enter the tap waveguide 53 is the optical waveguide direction. In Fig. 1, the optical waveguide direction is the direction from left to right. Further, the direction in which the tap waveguide 53 faces the side surface of the optical fiber 50 from the core 51 is the tap direction. In Fig. 1, the tap direction is the direction inclined in the forward direction with respect to the optical waveguide direction.

The grating portion 20 converts only light of the wavelength to be extracted from the light propagating in the core 51 of the optical fiber 50, into an LP11 mode with a long-period grating. A grating structure can be formed by femtosecond laser processing, $CO_2$ laser processing, or grating pressing, for example.

The tap portion 10 includes the tap waveguide 53 extending from the center of the core 51 toward the side surface of the optical fiber 50 (the interface with the cladding 52) at an angle $\alpha$. The tap portion 10 selectively extracts only the LP11 mode from the core 51 by controlling the angle $\alpha$ between the tap waveguide 53 and the core 51, the diameter $d_t$ of the tap waveguide 53, and the refractive index of the tap waveguide 53.

Here, light to be coupled from the core 51 to the tap waveguide 53 is defined as tap light, and light directly propagating in the core 51 is defined as transmitted light. For example, by connecting a light receiving element to the output end (the side surface of the optical fiber 50) of the tap portion 10, it is possible to extract and receive only the tap light from the optical fiber 50.

In the tap portion 10, the efficiency of coupling from the core 51 to the tap waveguide 53 greatly depends on the propagation mode of the light propagating in the core 51. This is because, the higher the mode, the smaller the confinement, and the easier the coupling to the tap waveguide 53. Accordingly, only the higher-order mode can be coupled to the tap waveguide.

To couple only the higher-order mode to the tap waveguide 53 herein, the refractive index of the tap waveguide 53 and the value of the diameter $d_t$ are important. If these values are too great, the NA of the tap waveguide 53 becomes larger, and the LP01 mode is also easily coupled thereto. Therefore, the transmitted light loss increases. If these values are too small, on the other hand, the NA of the tap waveguide 53 becomes smaller, and the higher-order mode is not easily coupled thereto. Therefore, the efficiency of coupling of the tap light to the tap waveguide 53 becomes lower. That is, it is necessary to appropriately determine the refractive index of the tap waveguide 53 and the value of the diameter $d_t$.

Further, in order to couple the light of the higher-order mode to the tap waveguide 53 with high efficiency, and transmit the light of the basic mode while confining the light in the core 51, it is necessary to make $\alpha$ sufficiently smaller, and adiabatically change the mode (see Non Patent Literature 2, for example). When $\alpha$ is large, the LP01 mode is also coupled to a radiation mode under the influence of the tap waveguide 51, and a loss occurs. Therefore, the upper limit value of $\alpha$ is determined from the viewpoint of the loss in the LP01 mode. On the other hand, $\alpha$ can take any greater value than 0, but the total length $L_{tap}$ of the tap portion 10 is determined by $\alpha$ according to the expression shown below. Accordingly, the lower limit value of $\alpha$ is determined from the viewpoint of the required condition for the propagation loss of the tap waveguide 53 and the total length of the device.

[Mathematical Expression 1]

$$L_{tap} = \frac{d_f}{2\tan\alpha} \qquad (1)$$

In Expression (1), the unit of $\alpha$ is radian.

In a general single-mode fiber, the diameter $d_f$ of the optical fiber 50 is 125 um. For example, to set the tap portion $L_{tap}$ to 5 cm or shorter, $\alpha$ needs to be set to 0.07° or greater.

The grating portion 20 includes the grating 21 with pitch $\Lambda$. For example, the grating 21 is a long-period fiber grating (LPG). To convert only a desired wavelength $\lambda$ from the LP01 mode to the LP11 mode in the grating portion 20, the pitch $\Lambda$ is set so as to satisfy the following expression.

[Mathematical Expression 2]

$$\Lambda = \lambda / (n_{eff1} - n_{eff2})$$

Here, $n_{eff1}$ represents the effective refractive index of the basic mode (LP01) propagating in the core 51, $n_{eff2}$ represents the effective refractive index of the higher-order mode (LP11), and $\lambda$ represents the wavelength in vacuum. Note that an effective refractive index means an effective refractive index in a state in which any grating is not included.

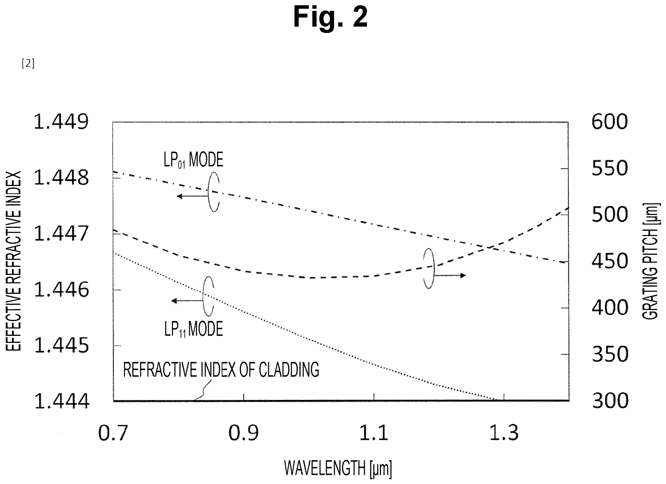

Fig. 2 is a graph for explaining the relationship among the effective refractive index $n_{eff1}$ of the basic mode, the effective refractive index $n_{eff2}$ of the higher-order mode (LP11), the grating pitch $\Lambda$, and the wavelength $\lambda$. In Fig. 2, the abscissa axis indicates the wavelength $\lambda$, the first ordinate axis indicates the effective refractive index, and the second ordinate axis indicates the grating pitch $\Lambda$. The optical fiber is calculated as a step-type refractive index distribution having a core radius of 4.1 $\mu$m and a relative refractive index difference $\Delta_{core} = 0.35\%$ of the core, so as to be equivalent to a general single-mode fiber. Note that the relative refractive index difference $\Delta_{core}$ of the core is defined by the expression shown below.

[Mathematical Expression 3]

$$\Delta_{core} = \frac{n_{core}^2 - n_{clad}^2}{2n_{core}^2} \qquad (3)$$

The dot-and-dash line indicates the effective refractive index $n_{eff1}$ of the LP01 mode with respect to the wavelength $\lambda$, the dotted line indicates the effective refractive index $n_{eff2}$ of the LP11 mode with respect to the wavelength $\lambda$, the solid-line indicates the refractive index of the cladding (1.444 at all wavelengths), and the dashed line indicates the grating pitch $\Lambda$ at which the LP01 mode is converted into the LP11 mode with respect to the wavelength $\lambda$.

Further, the grating portion 10 needs to be a structure capable of transmitting the LP11 mode. For example, in the structure described with reference to Fig. 2, the LP11 mode does not exist in the regions of a wavelength of 1.3 um or longer, and therefore, light of a wavelength of 1.3 um or longer cannot be extracted as tap light. The condition for propagation of the higher-order mode is defined as V > 2.4, using the normalized frequency V value shown in the following expression (see Non Patent Literature 3, for example).

[Mathematical Expression 4]

$$V = \frac{\pi}{\lambda} d_{core} n_{core} \sqrt{2\Delta_{core}} \qquad (4)$$

That is, it is necessary to set the core diameter $d_c$ (represented by $d_{core}$ in Expression (4)), the refractive index $n_{core}$ of the core, and the relative refractive index difference $\Delta_{core}$ of the core so that Expression (4) becomes 2.4 or greater in the wavelength of the light to be output as the tap light.

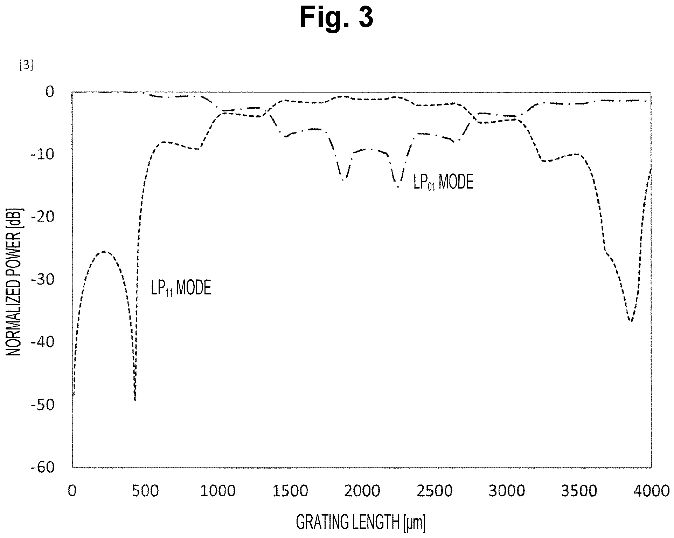

Fig. 3 is a graph for explaining the relationship between the grating length Lg and the amount of coupling between modes at a wavelength of 1.1 um. Here, the amount of coupling is obtained by normalizing the power of each mode output from the grating portion 20 with the power of the incident light when the LP01 mode enters the grating portion 20. The grating pitch $\Lambda$ is 435 um, which is obtained at the wavelength of 1.1 um from the dashed line in Fig. 2.

As the grating length Lg is made to change, the respective amounts of coupling change. That is, it is possible to control the efficiency of conversion to the LP11 mode by adjusting the grating length Lg of the grating portion 20 in accordance with the power to be extracted into the tap waveguide 53.

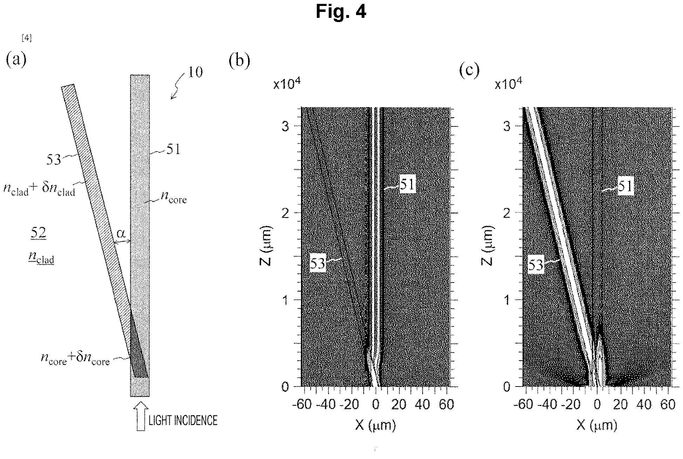

Fig. 4 is diagrams for explaining the structure and the characteristics of the tap portion 10. Fig. 4(a) is a diagram for explaining the structure of the tap portion 10. The tap waveguide 53 is formed with the angle $\alpha$ in the core 51. The refractive index of the core 51 is represented by $n_{core}$, and the refractive index of the cladding 52 is by $n_{clad}$. The tap waveguide 53 can be formed in the optical fiber 50 by a femtosecond laser processing technique as disclosed in Non Patent Literature 1. At this stage, the amounts of modulation of the refractive indexes of the core 51 and the cladding 52 by a femtosecond laser (the differences in the refractive indexes changed by the laser) are defined as $\delta n_{core}$ and $\delta n_{clad}$, respectively. Accordingly, in the refractive index of the tap waveguide 53 is expressed as $n_{core} + \delta n_{core}$ in the portion overlapping the core 51, and is expressed as $n_{clad} + \delta n_{clad}$ in the portion overlapping the cladding 52.

Figs. 4(b) and 4(c) are graphs for explaining an electrical field distribution when light enters the tap portion 10 from the direction of the arrow in Fig. 4(a). Fig. 4(b) is a graph obtained when light entered in the LP01 mode, and Fig. 4(c) is a graph obtained when light entered in the LP11 mode. Note that the calculation was performed on the assumption that the wavelength is 1280 nm, $d_c = 8.2$ um, $\Delta_{core} = 0.35\%$, $\alpha = 0.1°$, and $d_t = 5$ $\mu$m. Further, since the Ge addition amount in a general single-mode fiber is as small as several mol%, the difference in the amount of modulation of the refractive index between the core 51 and the cladding 52 by a femtosecond laser depending on the material is considered sufficiently small. Accordingly, it can be considered that $\delta n_{core}$ and $\delta n_{clad}$ are substantially equal, and $\delta n_{core} = \delta n_{clad} = \delta n = 0.005$. Hereinafter, $\delta n_{core}$ and $\delta n_{clad}$ will be written as $\delta n$.

As illustrated in Fig. 4(b), the light of the LP01 mode is not coupled to the tap waveguide 53, and continues to propagate in the core 51. On the other hand, as illustrated in Fig. 4(c), the light of the LP11 mode is coupled to the tap waveguide 53, and does not propagate in the core 51. As described above, by appropriately designing the tap waveguide 53, it is possible to selectively couple only the light of the LP11 mode to the tap waveguide 53, and extract the light.

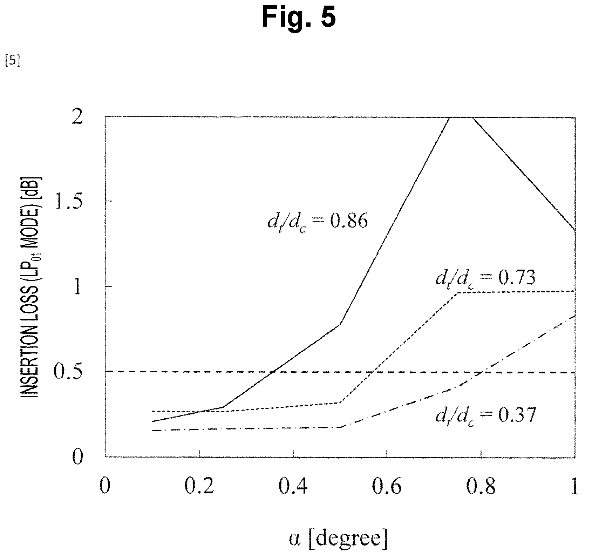

The optical side input/output circuit 301 preferably has a low loss of transmitted light to be received by the tap portion 10. With connection of optical side input/output circuits 301 in multiple stages being taken into consideration, the loss per one optical side input/output circuit 301 is preferably restricted to 0.5 dB or smaller. Fig. 5 is a graph for explaining the $\alpha$ dependence of the loss of transmitted light to be received by the tap portion 10 (the insertion loss at the tap portion 10) when the light of the LP01 mode entered the tap portion 10. The solid line, the dotted line, and the dot-and-dash line indicate data in cases where the ratio between the diameter $d_t$ of the tap waveguide and the diameter $d_c$ of the core was 0.86, 0.73, and 0.37, respectively. Also, the other parameters were set as follows: the refractive index modulation amount $\delta n = 0.005$, the ratio of the refractive index modulation amount to the refractive index difference between the core and the cladding $\delta n/(n_{core} - n_{clad}) = 0.98$, the wavelength = 1280 nm, $d_c = 8.2$ gm, $d_t = 5$ um, and $\Delta_{core} = 0.35\%$.

The insertion loss at the tap portion 10 monotonically increases in proportion to $\alpha$. For example, to restrict the insertion loss to 0.5 dB or smaller, $\alpha$ is only required be set to 0.8°, 0.55°, and 0.35° or smaller, when $d_t/d_c$ = 0.37, 0.74, and 0.86, respectively.

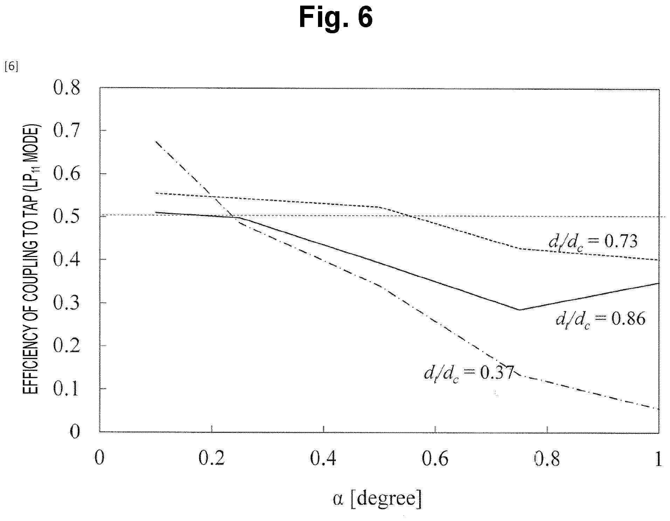

Meanwhile, in the optical side input/output circuit 301, the light of the LP11 mode is preferably coupled to the tap waveguide 53 as much as possible. To extract and receive the light of the LP11 mode, a coupling efficiency of 50% or higher is desirable. Fig. 6 is a graph for explaining the $\alpha$ dependence of the efficiency of coupling to the tap waveguide 53 when the light of the LP11 mode entered the tap portion 10. The meanings of the respective lines and the respective parameters are the same as those in Fig. 5.

The coupling efficiency at the tap portion 10 monotonically decreases in proportion to $\alpha$. For example, to achieve a coupling efficiency of 50% or higher, $\alpha$ is only required to be set to 0.25°, 0.6°, and 0.23° or smaller, when $d_t/d_c$ = 0.37, 0.74, and 0.86, respectively.

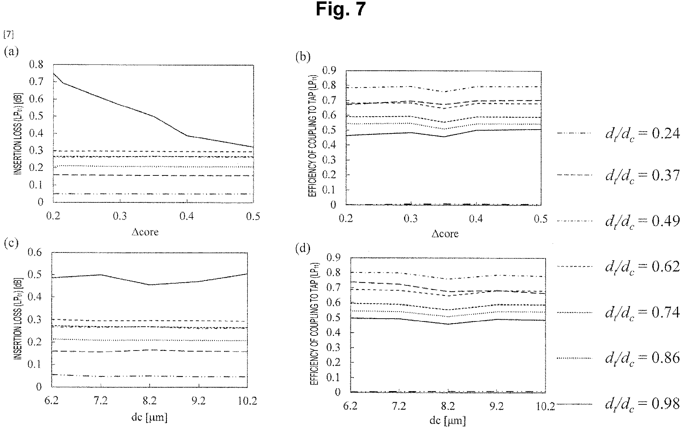

Fig. 7 is graphs for explaining the relationship between insertion loss and coupling efficiency in a core structure. Here, $n_{core}$, $d_c$, and the wavelength are changed so that the V value becomes constant in a case where $\alpha = 0.1$. In this example, $\alpha = 0.1°$, $\delta n = 0.005$, $\delta n/(n_{core} - n_{clad}) = 0.98$, and $d_t = 5$ $\mu$m.

Figs. 7(a) and 7(b) are graphs for explaining the insertion loss of the LP01 mode and the efficiency of coupling of the LP11 mode to the tap waveguide 53 when $\Delta_{core}$ was changed while $d_c = 8.2$ $\mu$m. Figs. 7(c) and 7(d) are graphs for explaining the insertion loss of the LP01 mode and the efficiency of coupling of the LP11 mode to the tap waveguide 53 when $d_c$ was changed while $\Delta_{core} = 0.35\%$. The wavelength is adjusted so that each V value is fixed at V = 2.44. It can be confirmed that the $\Delta_{core}$ dependence of the loss of the LP01 mode is large when $d_t/d_c = 0.98$ (see the solid line in Fig. 7(a)), but the dependence on the core structure is small in the other structures.

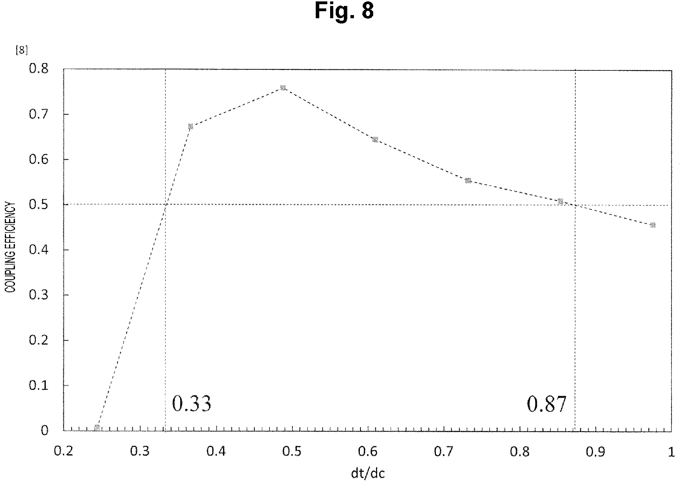

Fig. 8 is a graph for explaining the $d_t/d_c$ dependence of the efficiency of coupling of the LP11 mode, when V = 2.44, $\alpha = 0.1°$, $\delta n = 0.005$, $\delta n/(n_{core} - n_{clad}) = 0.98$, the wavelength = 1280 nm, $d_c = 8.2$ um, and $\Delta_{core} = 0.35\%$. As can be seen from Fig. 8, the coupling efficiency is 50% or higher in the region where $0.33 \leq d_t/d_c \leq 0.87$.

From Figs. 7 and 8, it is considered that the coupling efficiency is 50% or higher in the region where $0.33 \leq d_t/d_c \leq 0.87$, and that the dependence on the core structure is small under the condition the V value is constant. Therefore, in the description below, calculation is performed in the region where $0.33 \leq d_t/d_c \leq 0.87$, using the V value. Hereinafter, in the core structure, $d_c = 8.2$ $\mu$m, $\Delta_{core} = 0.35\%$, and the wavelength is changed so that the V value becomes constant. However, within the region where $0.33 \leq d_t/d_c \leq 0.87$, even if the core structure changes, the characteristics can be obtained as long as the V value remains the same.

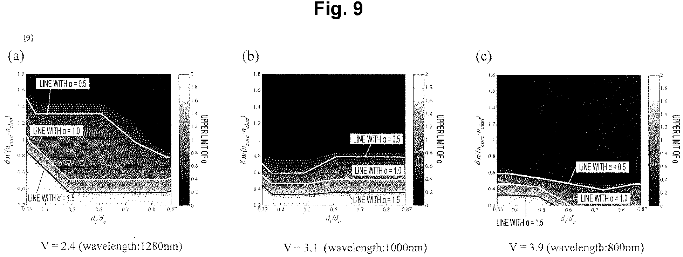

Fig. 9 is graphs for explaining the range of $\alpha$ where the insertion loss of the LP01 mode is 0.5 dB or smaller. In Fig. 9, $\delta n/(n_{core} - n_{clad})$, V, and $d_t/d_c$ are changed, to obtain the maximum value of $\alpha$ that can restrict the insertion loss of the LP01 mode to 0.5 dB or smaller as illustrated in Fig. 5. Figs. 9(a), 9(b), and 9(c) illustrate the maximum values of $\alpha$ in cases where V = 2.4, 3.1, and 3.9, respectively. In Fig. 9, the denser the black, the smaller $\alpha$ needs to be. As described above, the tap portion 10 needs to be a structure in which the LP11 mode propagates, and therefore, the region in which the minimum V value for transmitting the LP11 mode is V = 2.4 or greater is the design region. Further, in the present invention, the coupling efficiency of extracted tap light is preferably high as described above.

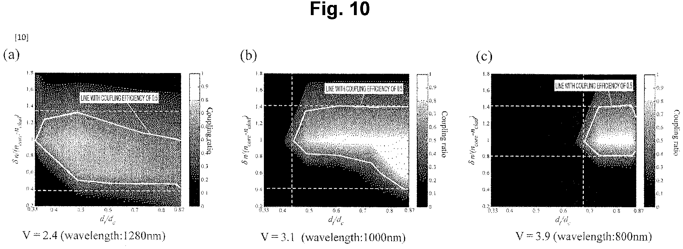

Fig. 10 is graphs for explaining the range of the maximum value of the coupling efficiency (the efficiency of coupling of the LP11 mode to the tap waveguide when the insertion loss of the LP01 mode is 0.5 dB or smaller) obtained in the region of $\alpha$ (equal to or smaller than the maximum value of $\alpha$) calculated in Fig. 9. Note that the minimum value of $\alpha$ is set to 0.1. Figs. 10(a), 10(b), and 10(c) are data when V = 2.4, V = 3.1, and V = 3.9, respectively. For example, as can be seen from Fig. 10(b), when V = 3.1,

there are no regions in which the coupling efficiency is 0.5 or higher, and sufficient tap light is not obtained in the region expressed as follows:

$$\delta n/(n_{core} - n_{clad}) < 0.4,$$

$$\delta n/(n_{core} - n_{clad}) > 1.4,$$

and

$$d_t/d_c < 0.45$$

Likewise, as can be seen from Fig. 10(c), when V = 3.9, there are no regions in which the coupling efficiency is 0.5 or higher, and sufficient tap light is not obtained in the region expressed as follows:

$$\delta n/(n_{core} - n_{clad}) < 0.8,$$

$$\delta n/(n_{core} - n_{clad}) > 1.4,$$

and

$$d_t/d_c < 0.68$$

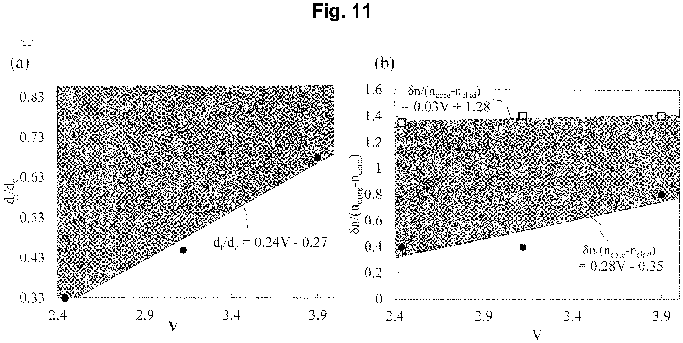

At least, $\delta n/(n_{core} - n_{clad})$ and $d_t/d_c$ need to be set so as to be in the region (the region in which the coupling efficiency can be 0.5 or higher, but the coupling efficiency is not necessarily 0.5 or higher in this region) excluding the region in which the coupling efficiency is neither equal to nor higher than 0.5 (the region in which the coupling efficiency is lower than 0.5). Fig. 11 is graphs for explaining the region in which the coupling efficiency obtained by changing the V value is 0.5 or higher. The expression (the solid line) in Fig. 11(a) indicates the dependence of $d_t/d_c$ on the V value, and the region above the solid line is the region in which the coupling efficiency can be 0.5 or higher. The two expressions (the dashed line and the solid line) in Fig. 11 (b) indicate the V value dependence of $\delta n/(n_{core} - n_{clad})$, and the region between the two straight lines is the region in which the coupling efficiency can be 0.5 or higher. Note that, as described in the explanation of the core structure dependence with reference to Fig. 7, the core structure dependence is shown within the range of $0.33 \leq d_t/d_c \leq 0.87$.

As described above, to reduce the insertion loss of the LP01 mode and obtain a coupling efficiency of the LP11 mode of 50% or higher, it is necessary to set $\delta n/(n_{core} - n_{clad})$ and $d_t/d_c$ so as to satisfy at least the following expression.

[Mathematical Expression 5]

$$d_t/d_c \geq 0.24V - 0.27,$$

$$0.33 \leq d_t/d_c \leq 0.87,$$

$$0.28V - 0.35 \leq \delta n/(n_{core} - n_{clad}) \leq 0.03V + 1.28$$

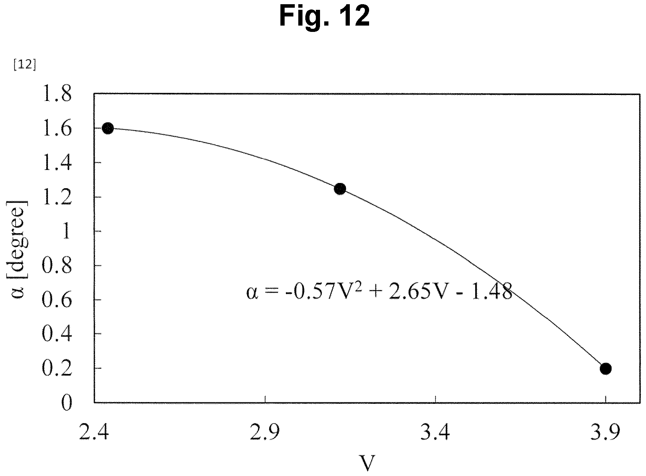

Further, the maximum value of $\alpha$ in the above region is obtained by comparing Fig. 9 with Fig. 10. In Figs. 9 and 10, the maximum value of $\alpha$ in the region in which the coupling efficiency is 0.5 or higher is 1.5, and 0.5 or more of tap light cannot be extracted at least in the region in which $\alpha$ is 1.5 or greater. Fig. 12 is a graph for explaining the V value dependence of the maximum value of $\alpha$ that can be tolerated. As can be seen from Fig. 12, it is necessary to set $\alpha$ so as to satisfy the following expression.

[Mathematical Expression 6]

$$\alpha \leq -0.58V2 + 2.65V - 1.48$$

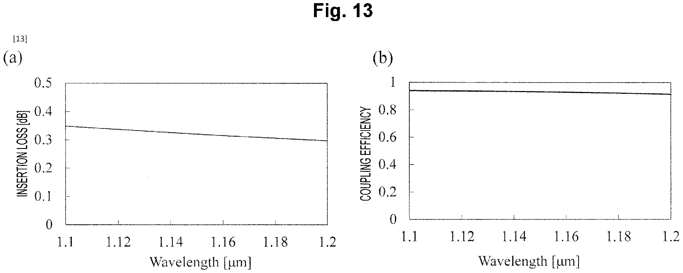

Fig. 13(a) is a graph for explaining the insertion loss at the tap portion 10. Fig. 13(b) is a graph for explaining the wavelength dependence of the efficiency of coupling of the P11 mode to the tap waveguide 53. The parameters of the tap portion 10 are $d_c = 8.2$ um, $\Delta_{core} = 0.35\%$, $\alpha = 0.1$, $d_t = 4$ um, and $\delta n/(n_{core} - n_{clad}) = 0.98$. In the band of the wavelength of 100 nm described with reference to Fig. 13, the wavelength dependence of the insertion loss is 0.5 dB or lower, and the wavelength dependence of the coupling efficiency is 5% or lower, which are sufficiently small. Accordingly, within the region of about a 100 nm band, the same insertion loss and coupling efficiency can be achieved, even if the wavelengths of tap light and transmitted light are changed.

(Second Embodiment)

The grating portion 20 described in the first embodiment has a structure and a wavelength in which two modes propagate. On the other hand, in the wavelength range in which the LP11 mode does not propagate, the refractive index of the core of the entire grating portion 20 can be changed (raised) by femtosecond laser processing, for example, so that the LP11 mode can propagate in the grating portion 20.

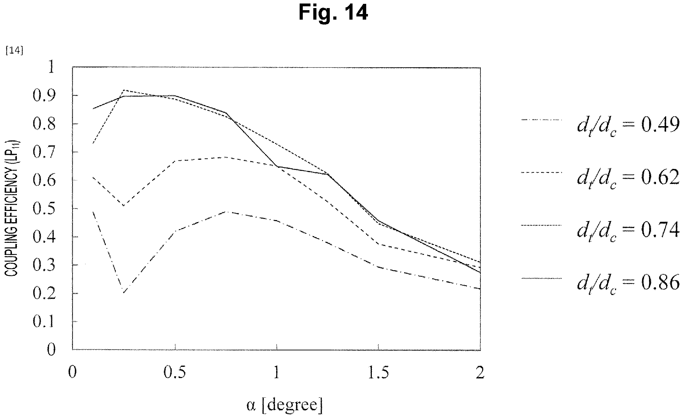

In the case described herein, the refractive index of the core of the entire grating portion 20 is made higher than the refractive index of the core 51 at other portions, and light including the LP11 mode excited by the grating portion 20 enters the tap portion 10. Fig. 14 is a graph for explaining the $\alpha$ dependence of the efficiency of coupling of light of the LP11 mode (of a wavelength of 1550 nm) to the tap waveguide 53 in this case. The dot-and-dash line, the dashed line, the dotted line, and the solid line in Fig. 14 indicate the data obtained when $d_t/d_c = 0.49, 0.61, 0.73,$ and $0.85$, respectively. Further, the respective parameters are $d_c = 8.2$ um, $\Delta_{core} = 0.35\%$, $\alpha = 0.1$, $d_t = 4$ um, and $\delta n/(n_{core} - n_{clad}) = 0.98$.

As can be seen from Fig. 14, when the refractive index of the core is increased in the optical fiber portion at the stage before the tap portion 10, and the LP11 mode is excited in the portion, the LP11 mode light can be selectively coupled to the tap waveguide 53, even if the tap portion 10 is a structure that does not transmit the LP11 mode light.

(Third Embodiment)

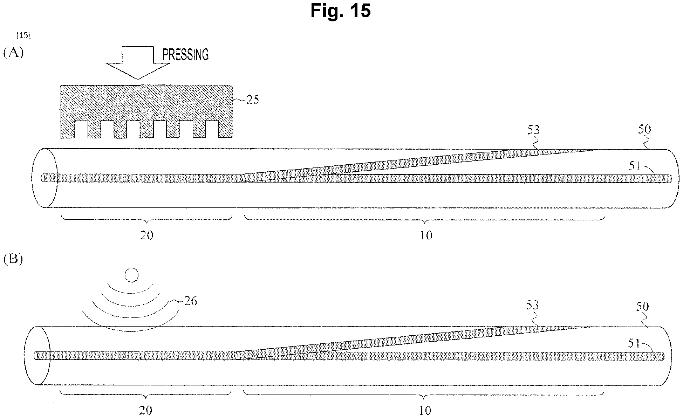

Fig. 15 is diagrams for explaining methods for forming the grating portion 20. Fig. 15(A) is a diagram for explaining a pressing method (Non Patent Literature 4) by which a jig 25 is pressed against the optical fiber 50 from outside the optical fiber 50. Fig. 15(B) is a diagram for explaining an ultrasonic method (Non Patent Literature 5) by which ultrasonic waves 26 are emitted from outside the optical fiber 50, and an acousto-optical effect is used.

The grating pitch of the grating portion 20 can be adjusted with the amount of pressing or the pitch of the jig 25 in the case of the pressing method, and with the intensity or the frequency of the ultrasonic waves 31 in the case of the ultrasonic method. Accordingly, by the methods as illustrated in Fig. 15, the coupling amount and the extraction wavelength can be controlled from outside. Further, by the pressing method, it is not necessary to remove the coating of the optical fiber 50, and thus, the influence on the core wire can be minimized.

(Fourth Embodiment)

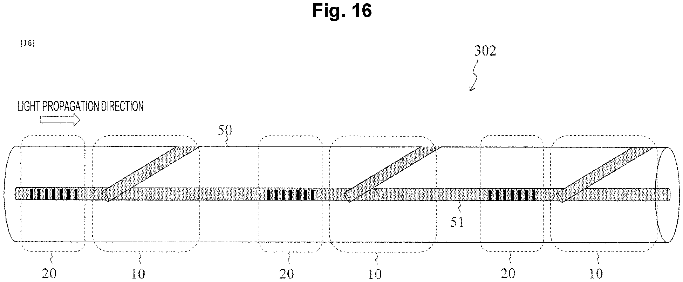

Fig. 16 is a diagram for explaining an optical side input/output circuit 302 according to this embodiment. The optical side input/output circuit 302 differs from the optical side input/output circuit 301 described in the first embodiment, in that a plurality of sets of the tap portion 10 and the grating portion 20 is continuously arranged in the optical fiber 50. In the optical side input/output circuit 302, a plurality of the sets is arranged in the light propagation direction, so that path control or multistage optical power feeding can be performed at any desired location in the transmission path.

(Fifth Embodiment)

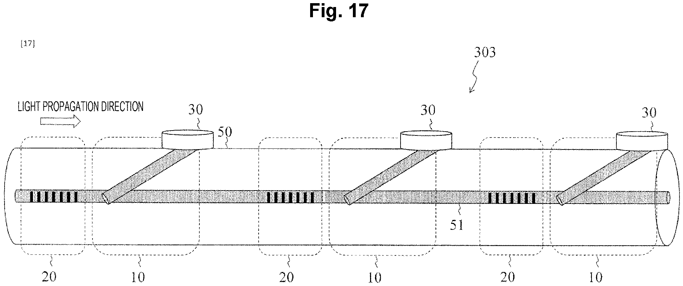

Fig. 17 is a diagram for explaining an optical side input/output circuit 303 according to this embodiment. The optical side input/output circuit 303 is the same as the optical side input/output circuit 302 described in the fourth embodiment, except for further including light receivers 30 that are disposed on the side surface of the optical fiber 50 and receive light that is output from the tap portions 10. As illustrated in Fig. 17, the light receivers 30 are attached to the side surface of the optical fiber 50, so that tap light can be received. The optical side input/output circuit 303 can be an optical feed system that can convert tap light into electricity, and supply the electricity to each terminal of a large number of sensor terminals, for example.

(Sixth Embodiment)

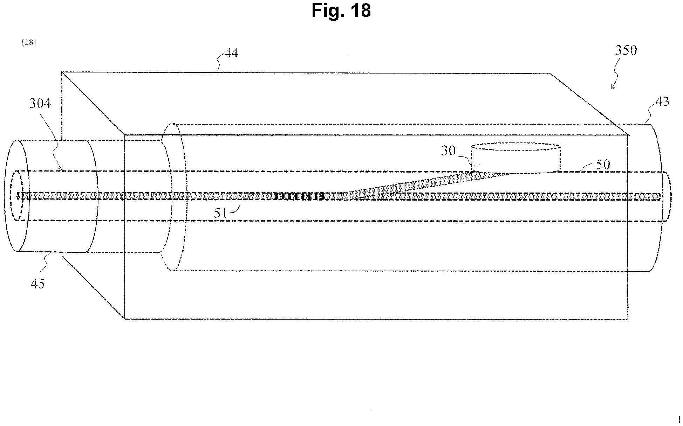

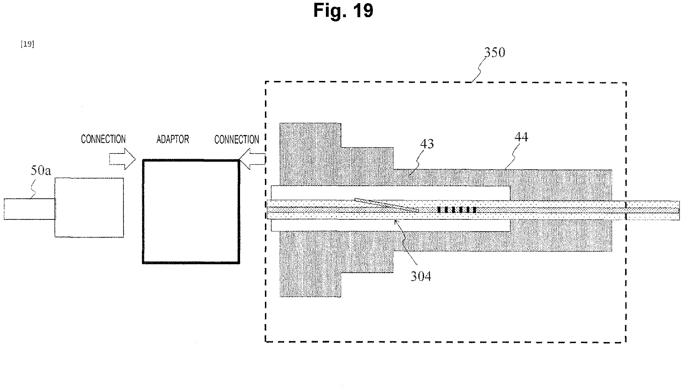

Figs. 18 and 19 are diagrams for explaining an optical connector 350 of this embodiment. The optical connector 350 includes an optical side input/output circuit 304. The optical side input/output circuit 304 is the same as the optical side input/output circuit 301 described in the first embodiment, except for further including a light receiver 30 that is disposed on the side surface of the optical fiber 50 and receives light that is output from the tap portions 10. Although the plurality of light receivers 30 is provided in the fifth embodiment, this embodiment is an example in which one light receiver 30 is provided. Reference numeral 45 indicates the coating of the optical fiber 50.

The optical connector 350 includes a ferrule 43 that houses the optical side input/output circuit 304, and a connector plug 44 that serves to connect to another optical connector. The shape of the connector plug 44 is of SC type, FC type, LC type, MPO type, or the like, which is widely used. By inserting the optical side input/output circuit 304 into the optical connector 350, it is possible to easily connect to another optical fiber 50a, and realize optical side inputs/outputs from the optical fiber 50.

(Point)

The optical side input/output circuits and the optical connector described in the first to sixth embodiments can output only a desired wavelength from a side surface of a fiber by selectively coupling only a higher-order mode to the tap portion, using a difference in the amount of coupling to the tap portion between modes in the tap portion.

(Effects)

In the optical side input/output circuits and the optical connector described in the first to sixth embodiments, wavelength selectivity is added to the optical side input/output technology, so that light of a desired wavelength and desired power are extracted in a transmission path. For example, feed light is extracted in multiple stages, sensor control is performed, and the extracted light is input to another optical fiber. Thus, path control can be performed depending on wavelength.

Reference Signs List

| 10 | tap portion |
|---|---|
| 20 | grating portion |
| 21 | long-period fiber grating (LPG) |
| 30 | light receiver |
| 43 | ferrule |
| 44 | connector plug |
| 45 | coating |
| 50, 50a | optical fiber |
| 51 | core |
| 52 | cladding |
| 53 | tap waveguide |
| 301 to 304 | optical side input/output circuit |
| 350 | optical connector |

**Claims**

1.  An optical side input/output circuit comprising:

    a tap portion (10) in which a tap waveguide (53) that outputs light of a higher-order mode from a side surface of an optical fiber (50, 50a) is formed, the light of the higher-order mode being of light propagating in a core (51) of the optical fiber (50, 50a); and
    a grating portion (20) that is located in a stage before the tap portion (10) in a propagation direction of the light, and has a grating that converts light of a desired wavelength from a basic mode to the higher-order mode, the grating being formed in the core (51) of the optical fiber (50, 50a).

2.  The optical side input/output circuit according to claim 1, wherein

    the grating is set so that a pitch $\Lambda$ satisfies

    $$\Lambda = \lambda/(n_{eff1} - n_{eff2}),$$

    provided that $\lambda$ represents a value of the desired wavelength in vacuum, $n_{eff1}$ represents an effective refractive index of the basic mode and $n_{eff2}$ represents an effective refractive index of the higher-order mode.

3.  The optical side input/output circuit according to claim 1 or 2, wherein

    the grating portion (20) has a normalized frequency V of 2.4 or higher at the desired wavelength, and
    the tap portion (10) satisfies

$$d_t/d_c \geq 0.24V - 0.27,$$

$$0.33 \leq d_t/d_c \leq 0.87,$$

$$0.28V - 0.35 \leq \delta n/(n_{core} - n_{clad}) \leq 0.03V + 1.28,$$

and

$$\alpha \leq -0.58V^2 + 2.65V - 1.48,$$

where $d_t$ represents a diameter of the tap waveguide (53), $d_c$ represents a diameter of the core (51) of the optical fiber (50, 50a), $\delta n$ represents a refractive index change amount of the tap waveguide (53) with respect to the optical fiber (50, 50a), $n_{core}$ and $n_{clad}$ represent a refractive index of the core (51) of the optical fiber (50, 50a) and a refractive index of a cladding (52), respectively, and $\alpha$ represents an angle (°) formed by the core (51) of the optical fiber (50, 50a) and the tap waveguide (53).

4. The optical side input/output circuit according to claim 1 or 2, wherein a refractive index of a core (51) of the grating portion (20) is higher than a refractive index of a core (51) of the tap portion (10).

5. The optical side input/output circuit according to any one of claims 1 to 4, wherein a plurality of sets of the tap portion (10) and the grating portion (20) is continuously arranged in the optical fiber (50, 50a).

6. The optical side input/output circuit according to any one of claims 1 to 5, further comprising a light receiver (30) that is disposed on the side surface of the optical fiber (50, 50a), and receives the light output from the tap portion (10).

7. An optical connector (350) comprising the optical side input/output circuit according to any one of claims 1 to 6.


**Patentansprüche**

1. Optische Seiten-Eingangs/Ausgangsschaltung, aufweisend:

   einen Abgriffsabschnitt (10), in dem ein Abgriffswellenleiter (53) ausgebildet ist, der Licht einer Mode höherer Ordnung an eine Seitenfläche einer optischen Faser (50, 50a) ausgibt, wobei das Licht der Mode höherer Ordnung Licht ist, das sich in einem Kern (51) der optischen Faser (50, 50a) ausbreitet; und
   einen Gitterabschnitt (20), der in einer Ausbreitungsrichtung des Lichts an einer Stelle vor dem Abgriffsabschnitt (10) angeordnet ist und ein Gitter aufweist, das Licht einer gewünschten Wellenlänge aus einer Grundmode zu Licht der Mode höherer Ordnung umwandelt, wobei das Gitter in dem Kern (51) der optischen Faser (50, 50a) ausgebildet ist.

2. Optische Seiten-Eingangs/Ausgangsschaltung nach Anspruch 1 wobei

   das Gitter so eingestellt ist, dass eine Teilung A folgende Formel erfüllt: $\Lambda = \lambda/(n_{eff1} - n_{eff2})$,
   unter der Voraussetzung, dass $\lambda$ einen Wert der gewünschten Wellenlänge im Vakuum, $n_{eff1}$ ein effektiver Brechungsindex der Grundmode und $n_{eff2}$ ein effektiver Brechungsindex der Mode höherer Ordnung ist.

3. Optische Seiten-Eingangs/Ausgangsschaltung nach Anspruch 1 oder 2, wobei

   der Gitterabschnitt (20) bei der gewünschten Wellenlänge eine normalisierte Frequenz V von 2.4 oder höher aufweist, und
   der Abgriffsabschnitt (10) Folgendes erfüllt

$$d_t/d_c \geq 0.24V - 0.27,$$

$$0.33 \leq d_t/d_c \leq 0.87,$$

$$0.28V - 0.35 \leq \delta n/(n_{kern} - n_{mantel}) \leq 0.03V + 1.28,$$

und

$$\alpha \leq -0.58V^2 + 2.65V - 1.48,$$

wobei $d_t$ einen Durchmesser des Abgriffswellenleiters (53) darstellt, $d_c$ einen Durchmesser des Kerns (51) der optischen Faser (50, 50a) darstellt, $\delta n$ einen Betrag der Brechungsindexänderung des Abgriffswellenleiters (53) in Bezug auf die optische Faser (50, 50a) darstellt, $n_{kern}$ und $n_{mantel}$ einen Brechungsindex des Kerns (51) der optischen Faser (50, 50a) bzw. einen Brechungsindex eines Mantels (52) darstellen und $\alpha$ einen Winkel (°) darstellt, der durch den Kern (51) der optischen Faser (50, 50a) und den Abgriffswellenleiter (53) gebildet wird.

4. Optische Seiten-Eingangs/Ausgangsschaltung nach Anspruch 1 oder 2, wobei ein Brechungsindex eines Kerns (51) des Gitterabschnitts (20) größer als ein Brechungsindex eines Kerns (51) des Abgriffabschnitts (10) ist.

5. Optische Seiten-Eingangs/Ausgangsschaltung nach einem der Ansprüche 1 bis 4, wobei eine Vielzahl von Sätzen des Abgriffabschnitts (10) und des Gitterabschnitts (20) kontinuierlich in der optischen Faser (50, 50a) angeordnet sind.

6. Optische Seiten-Eingangs/Ausgangsschaltung nach einem der Ansprüche 1 bis 5, ferner aufweisend einen Lichtempfänger (30), der auf der Seitenfläche der optischen Faser (50, 50a) angeordnet ist und das von dem Abgriffsabschnitt (10) ausgegebene Licht empfängt.

7. Optischer Verbinder (350), der die Seiten-Eingangs/Ausgangsschaltung nach einem der Ansprüche 1 bis 6 aufweist.

**Revendications**

1. Circuit d'entrée/sortie optique latérale, comprenant :

un tronçon de dérivation (10) dans lequel est placé un guide d'ondes de dérivation (53) qui émet une lumière d'un mode d'ordre supérieur à partir d'une surface latérale d'une fibre optique (50, 50a), la lumière du mode d'ordre supérieur étant une lumière qui se propage dans un coeur (51) de la fibre optique (50, 50a) ; et
un tronçon à réseau (20) qui est situé en amont du tronçon de dérivation (10) dans une direction de propagation de la lumière, et est pourvu d'un réseau qui convertit la lumière d'une longueur d'onde souhaitée d'un mode fondamental au mode d'ordre supérieur, le réseau étant placé dans le coeur (51) de la fibre optique (50, 50a) .

2. Circuit d'entrée/sortie optique latérale selon la revendication 1,

le réseau étant réglé de façon à ce qu'un pas $\Lambda$ vérifie

$$\Lambda = \lambda/(n_{eff1} - n_{eff2}),$$

étant entendu que $\lambda$ représente une valeur de la longueur d'onde souhaitée dans le vide, $n_{eff1}$ représente un indice de réfraction effectif du mode fondamental et $n_{eff2}$ représente un indice de réfraction effectif du mode d'ordre supérieur.

3. Circuit d'entrée/sortie optique latérale selon la revendication 1 ou 2,

le tronçon à réseau (20) présentant une fréquence normalisée V supérieure ou égale à 2,4 à la longueur d'onde souhaitée, et
le tronçon de dérivation (10) vérifiant

$$d_t/d_c \geq 0,24V - 0,27,$$

$$0,33 \leq d_t/d_c \leq 0,87,$$

$$0,28V - 0,35 \leq \delta n/(n_{core} - n_{clad}) \leq 0,03V + 1,28,$$

et

$$\alpha \leq -0,58V^2 + 2,65V - 1,48,$$

$d_t$ représentant un diamètre du guide d'ondes de dérivation (53), $d_c$ représentant un diamètre du coeur (51) de la fibre optique (50, 50a), $\delta n$ représentant une quantité de variation d'indice de réfraction du guide d'ondes de dérivation (53) par rapport à la fibre optique (50, 50a), $n_{core}$ et $n_{clad}$ représentant respectivement un indice de réfraction du coeur (51) de la fibre optique (50, 50a) et un indice de réfraction d'une gaine (52), et $\alpha$ représentant un angle (°) formé par le coeur (51) de la fibre optique (50, 50a) et le guide d'ondes de dérivation (53).

4. Circuit d'entrée/sortie optique latérale selon la revendication 1 ou 2, un indice de réfraction d'un coeur (51) du tronçon à réseau (20) étant supérieur à un indice de réfraction d'un coeur (51) du tronçon de dérivation (10) .

5. Circuit d'entrée/sortie optique latérale selon l'une quelconque des revendications 1 à 4, une pluralité d'ensembles du tronçon de dérivation (10) et du tronçon à réseau (20) étant agencés de façon continue dans la fibre optique (50, 50a).

6. Circuit d'entrée/sortie optique latérale selon l'une quelconque des revendications 1 à 5, comprenant en outre un récepteur de lumière (30) qui est agencé sur la surface latérale de la fibre optique (50, 50a), et reçoit la lumière émise à partir du tronçon de dérivation (10).

7. Connecteur optique (350) comprenant le circuit d'entrée/sortie optique latérale selon l'une quelconque des revendications 1 à 6.

## Fig. 1

# Fig. 2

[2]

# Fig. 3

# Fig. 4

# Fig. 5

[5]

# Fig. 6

## Fig. 7

# Fig. 8

# Fig. 9

[9]

(a)

V = 2.4 (wavelength:1280nm)

(b)

V = 3.1 (wavelength:1000nm)

(c)

V = 3.9 (wavelength:800nm)

# Fig. 10

[10]

(a)

V = 2.4 (wavelength:1280nm)

(b)

V = 3.1 (wavelength:1000nm)

(c)

V = 3.9 (wavelength:800nm)

**Fig. 11**

[11]

(a)

(b)

# Fig. 12

## Fig. 13

[13]

(a)

(b)

## Fig. 14

[14]

COUPLING EFFICIENCY (LP$_{11}$)

α [degree]

$d_t/d_c = 0.49$

$d_t/d_c = 0.62$

$d_t/d_c = 0.74$

$d_t/d_c = 0.86$

**Fig. 15**

## Fig. 16

## Fig. 17

[17]

LIGHT PROPAGATION DIRECTION

303

30  50  30  30

20  10  20  10  20  10

51

## Fig. 18

**Fig. 19**

[19]

350

CONNECTION    ADAPTOR    CONNECTION

50a

43    44

304

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019515346 A

- US 2008079940 A1

### Non-patent literature cited in the description

- **PENG JI et al.** *optics express*, 2018, vol. 26 (12), 14972-14981
- **Y. SHANI et al.** Integrated Optic Adiabatic Devices on Silicon. *IEEE J. Quantum Electron.*, 1991, vol. 27 (3), 556-566
- **KATSUNARI OKAMOTO**. Theory of optical waveguides. CORONA PUBLISHING CO., LTD., 1992

- **A. URUSHIBARA et al.** Experimental verification of mode-dependent loss reduction by mode coupling using long-period grating. *OFC2017, Tu2J.6*, 2017
- **B. Y. KIM**. All-fiber acousto-optic frequency shifter. *Optics letters*, 1986, vol. 11 (6), 389-391